Europäisches Patentamt

European Patent Office

Office européen des brevets

(11) Veröffentlichungsnummer: **0 498 002 A1**

# (12) EUROPÄISCHE PATENTANMELDUNG

(21) Anmeldenummer: **91101512.1**

(22) Anmeldetag: **05.02.91**

(51) Int. Cl.5: **B01D 39/16**, D04H 1/54

(43) Veröffentlichungstag der Anmeldung:
**12.08.92 Patentblatt 92/33**

(84) Benannte Vertragsstaaten:
**AT BE CH DE ES FR GB IT LI NL SE**

(71) Anmelder: **STEINBEIS GESSNER GmbH**
**Rosenheimer Strasse 88**
**W-8204 Brannenburg(DE)**

(72) Erfinder: **Aigner, Helmar**

**W-8201 Kolbermoor(DE)**
Erfinder: **Haegler, Walter, Dr.**

**W-8152 Feldkirchen-Westerham(DE)**
Erfinder: **Klimmek, Albrecht**

**W-8206 Bruckmühl(DE)**
Erfinder: **Raabe, Ernst, Dipl.-Ing.**

**W-8201 Raubling-Nicklheim(DE)**

(74) Vertreter: **Brauns, Hans-Adolf, Dr. rer. nat. et al**
**Hoffmann, Eitle & Partner, Patentanwälte**
**Arabellastrasse 4**
**W-8000 München 81(DE)**

(54) **Selbsttragendes, plissier- und prägefähiges Meltblown-Vlies, Verfahren zu dessen Herstellung und dessen Verwendung als Filtermaterial.**

(57) Selbsttragende, plissier- und prägefähige Meltblown-Vliese werden erfindungsgemäß durch innere Verstärkung von Rohvliesen mit natürlichen oder synthetischen Imprägniermitteln aus wäßrigen oder nichtwäßrigen Systemen hergestellt, wobei ein Verschließen der Poren verhindert wird und die Porenstruktur weitgehend erhalten bleibt. Der Imprägniermittelflotte können Zusatzstoffe zur Modifizierung der Eigenschaften des Vlieses zugesetzt sein. Die erfindungsgemäßen Meltblown-Vliese sind besonders zur Verwendung als Filtermaterialien geeignet.

Die Erfindung betrifft ein selbsttragendes, plissier- und prägefähiges Meltblown-Vlies, ein Verfahren zu dessen Herstellung und dessen Verwendung als Filtermaterial.

Meltblown-Vliese könne mit besonders feinem Fasertiter hergestellt werden. Die große Faseroberfläche, Mikroporen und relativ hohe Luftdurchlässigkeit ergeben hervorragende Filtereigenschaften. Meltblown-Vliese werden deshalb auch im Bereich der Feinpartikelfiltration eingesetzt.

Die bekannten Meltblown-Vliese sind sehr weich und haben eine relativ geringe Festigkeit. Wenn aber insbesondere für Filtermaterialien plissierte und/oder geprägte Filterelemente erforderlich sind, dann müssen diese Meltblown-Vliese entsprechend verstärkt werden.

Diese Verstärkung hat man bisher vorgenommen, indem man auf das Meltblown-Vlies verstärkende Trägermaterialien aufkaschierte oder aber in anderer Weise Verfestigungselemente daran befestigte. Dieses Verfahren ist in US-A-4 104 170 beschrieben und hat den Nachteil, daß die Filtercharakteristik, gekennzeichnet durch Parameter wie Dicke des Filtermediums, Struktur, Luftdurchlässigkeit, Filterwiderstand, durch das aufgebrachte Kaschiermaterial verändert wird. Durch die Dickenerhöhung wird in einigen Fällen z.B. eine bestimmte Plisseegeometrie nicht mehr durchführbar. Verringerte Luftdurchlässigkeit und erhöhter Filterwiderstand schließen in bestimmten Anwendungsbereichen den Einsatz derartiger Materialien aus oder führen zumindest zu erhöhtem Energieverbrauch in der Filteranwendung, ganz abgesehen von der Reduzierung der Filterstandzeit.

Es besteht deshalb das Bedürfnis nach Meltblown-Vliesen, die diese Nachteile nicht aufweisen. Es ist die Aufgabe der vorliegenden Erfindung, Meltblown-Vliese zur Verfügung zu stellen, die eine Eigensteifigkeit und Eigenfestigkeit für die Plissierung und die Prägung aufweisen und trotzdem ihre Eignung zum Einsatz als Filtermaterial beibehalten.

Verbunden mit dieser Aufgabe ist, ein entsprechendes Verfahren zur Herstellung imprägnierter Meltblown-Vliese zur Verfügung zu stellen. Diese Aufgabe beinhaltet auch die Verwendung der erfindungsgemäßen Meltblown-Vliese für oder bei der Herstellung von Filterelementen. Diese Aufgabe wird durch ein Meltblown-Filter gemäß Anspruch 1 gelöst.

Der Erfindung liegt die Idee zugrunde, Meltblown-Vliese mit einer inneren Verstärkung zu versehen, um damit dem Produkt die erforderliche Steifheit und Festigkeitserhöhung für die gewünschte Weiterverarbeitung zu verleihen und gegebenenfalls durch verschiedene Zusätze die erfindungsgemäßen Meltblown-Vliese verschiedenen Anwendungsbereichen zu erschließen. Diese Verstärkung erfolgt nach dem erfindungsgemäßen Verfahren dadurch, daß man in geeigneter Weise eine Imprägnierung mit einem die Verstärkung ausbildenden Stoff vornimmt. Es wurde nun überraschend festgestellt, daß durch eine solche Imprägnierung unter Einhalten bestimmter Verfahrensbedingungen kein Verstopfen der Vliesporen erfolgt. Insbesondere zeichnet sich das erfindungsgemäß verstärkte Meltblown-Vlies durch das für Filteranwendungen erforderliche günstige Verhältnis aus Luftdurchlässigkeit und Porengröße, das je nach Vlieskonstruktion variabel ist, aus.

Um das Verschließen der Poren durch die Imprägnierung zu verhindern bzw. die für die Filteranwendung erforderliche Porenstruktur weitgehend zu erhalten, sind mit der Erfindung zwei wesentliche Voraussetzungen verbunden:

- Vermeidung der Filmbildung bzw. Segelbildung des applizierten Imprägniermittels durch Abstimmung des Imprägniermittelsystems auf das Polymer des Meltblown-Vlieses
- Vermeidung der Porenveränderung aufgrund von Imprägniermittelmigration an die Vliesoberflächen durch Verwendung geeigneter Trocknungsaggregate und entsprechender Steuerung des Trocknungsprozesses.

Als Ausgangsprodukte für die Herstellung des Meltblown-Rohvlieses kommen die Materialien in Frage, wie sie im allgemeinen in einem Meltblown-Verfahren verarbeitet werden können. Beispiele für diese Materialien sind Polyolefine, Polyester, Polyvinylalkohol, Polyvinylchlorid und Polyamid. Grundsätzlich können zur Herstellung von Meltblown-Vliesen alle Thermoplaste verwendet werden.

Die Ausgangsmaterialien für das erfindungsgemäße Verfahren sind solche Meltblown-Rohvliese. Die filtertechnisch relevanten Produktmerkmale werden durch die Konstruktion des unimprägnierten Vlieses vorgegeben und sind abhängig vom vorgesehenen Anwendungsbereich individuell einstellbar. So wird sich das Flächengewicht zwischen 25 und 300 $g/m^2$, vorzugsweise 50 und 200 $g/m^2$, die Luftdurchlässigkeit zwischen 20 und 2000 $l/m^2s$ bei 2 mbar und die Porengröße zwischen 10 und 150 $\mu m$ bewegen.

Die Imprägnierung kann erfindungsgemäß aus wäßrigen und aus nichtwäßrigen Systemen oder Emulsionen erfolgen. Als Imprägniermittel kommen für Imprägnierungen aus wäßrigen Systemen natürliche Imprägniermittel wie Stärke, Gelatine, Wasserglas, Kaseine und Mischungen daraus in Frage. Ebenso sind synthetische Imprägniermittel wie Polyvinylacetat, Polyvinylalkohol, Polyacrylate, Phenolharze, Copolymerisate und Mischungen daraus verwendbar. Die gemeinsame Anwendung von Mischungen aus beiden genannten Gruppen ist ebenfalls möglich. Die Imprägnierung aus wäßrigem System mit natürlichen und synthetischen Imprägniermitteln kann auch durch Zugabe von Lösungsmitteln bzw. Netzmitteln in die wäßrige Flotte erfolgen, um auch Meltblown-Vliese mit hydrophoben Eigenschaften gleichmäßig zu tränken. Die Verwendung des Lösungsmittel-Wassergemisches bewirkt einerseits eine gleichmäßige Verteilung der Imprägnierflotte im Rohvlies und andererseits wird durch die rasche Verdampfung des Lösungsmittels, z.B. Methanol, verhindert, daß das Imprägniermittel an die Oberfläche migriert und damit durch Porenverschluß die Porosität reduziert. In einer bevorzugten Ausführungsform wird ein hydrophobes Rohvlies in einer alkoholischen Lösung eines Netzmittels vorimprägniert. Durch das Aufbringen des Netzmittels auf das hydrophobe Vlies wird bei der anschließenden Imprägnierung eine gleichmäßige Durchdringung der Imprägnierflotte gewährleistet.

Als Imprägniermittel kommen für Imprägnierungen aus nichtwäßrigem Systemen beispielsweise folgende synthetische Imprägniermittel in Frage: Polyacrylate, Polyvinylacetate, Polyvinylchlorid, Phenolharze, Epoxide, Polyurethane, Polystyrole, Copolymerisate und Mischungen daraus.

Grundsätzlich sind alle in Lösungsmittel lösliche und zur Imprägnierung fähigen Kunststoffe verwendbar. Möglich sind auch Imprägnierungen auf Basis natürlicher Imprägniermittel, die über Lösungsmittelsysteme appliziert werden.

Die Imprägniermittel können als Lösungen, Emulsionen, Suspensionen, Dispersionen, Pulver und Feststoffe vorliegen. Die Imprägniermittel sind dabei in Mengen von 1 bis 100 Gew.%, je nach dem vorliegenden System, enthalten.

Die Imprägnierung kann im vorliegenden Fall durchgeführt werden durch Eintauchen, Tränken, Besprühen, Bestreichen, Bestreuen oder Bedrucken des zu imprägnierenden Materials. Gemäß einer Ausführungsform wird das Imprägniermittel durch ein- oder beidseitigen Auftrag oder durch Tauchen eingebracht. Dabei wird das Imprägniermittel in einer Menge von 5 bis 60 Gew.%, bevorzugt von 10 bis 50 Gew.%, besonders bevorzugt von 15 bis 35 Gew.% des gebundenen Vlieses aufgebracht. Das so behandelte Meltblown-Vlies wird durch Verdampfung des Lösungsmittels bzw. des Wassers getrocknet. Der Einsatz von Schwebetrocknern ist hierbei der Anwendung von Kontakttrocknern (z.B. Zylinder) vorzuziehen, da hier durch die Beeinflussung der Luftführung in Verbindung mit der gewählten Trocknungstemperatur die unerwünschte Imprägniermittelmigration zur Vliesoberfläche vermieden werden kann. Die Verdampfung durch Kontakttrocknung wie z.B. beheiztem Trockenzylinder würde zu starker Migration und zu Filmbildung und damit zu Porositätsverlusten führen, die mehr als 50 % betragen können. Bei reaktiven Imprägniersystemen kann die Reaktion zum Ende der Verdampfungsphase oder aber zeitversetzt dazu erfolgen. Bei Verwendung dieser Imprägniermittel besteht nur eine geringe Neigung die Poren zu verschließen, wenn mit niedermolekularen Substanzen gearbeitet wird. Erst nach Entfernen des Lösungsmittels bildet sich eine höhermolekulare Imprägnierung, die die Festigkeit erzeugt, ohne jedoch die der Luftdurchlässigkeit abträgliche Segelbildung des Imprägniermittels entstehen zu lassen.

Entsprechend den Anforderungen der vorgesehenen Einsatzgebiete können dem imprägnierten Vlies durch Zugabe von Additiven in der Imprägnierflotte zusätzliche Eigenschaften verliehen werden.

Die erfindungsgemäß imprägnierten Meltblown-Vliese können als Filterelemente in plissierter, genoppter Form beispielhaft in folgenden Anwendungsbereichen Verwendung finden:

Für die Filtration von Flüssigkeiten wie Wasser, Kraftstoffen, Schmiermitteln, Lösungsmitteln, in Koaleszenzfiltern oder als Filter für die Lebensmittelindustrie, wegen der besonderen Chemikalienbeständigkeit auch zur Filtration von aggressiven Medien.

In der Luft- bzw. Gasfiltration, in lufttechnischen Anlagen wie Klimaanlagen, Prozeßluft, Reinraumfiltration für z.B. die Halbleiterherstellung, in der Pharmaindustrie und im Krankenhausbereich, zur Reingasherstellung und der Abluftreinigung.

Besondere Anwendungsbereiche sind in der Kfz-Industrie, Öl-, Luft- und Fahrgastraumfilter, bei Staubsaugern Abluftfilter und in Batterieseperatoren Ionenfilter.

Zur Weiterverarbeitung der imprägnierten Meltblown-Vliese für die Filterelementherstellung kommen Plissiermaschinen zum Einsatz, die das Filtermedium zickzackförmig falten und je nach gefordertem Eigenschaftsspektrum, wie z.B. Abscheideleistung und Filterwiderstand, dem Vlies eine bestimmte Plisseegeometrie verleihen. Dabei werden durch Vorgabe der Faltenhöhe und des Faltenabstands die endgültigen Gebrauchseigenschaften des Filters beeinflußt. Für die geringe Verstopfungsneigung eines Filterelements und damit für seine Standzeit ist es wesentlich, daß die Falten des Filterplissees auch bei ansteigendem Filterwiderstand während des Gebrauchs auf Abstand gehalten werden. Die Abstandhaltung wird z.B. entweder durch eingelegte, zickzackgewellte Folien oder aber durch fadenartige Abstandhalter erreicht, die im pastösen Zustand auf das plane Filtermedium aufgebracht und mit dem Medium zusammen mitverfaltet werden. Durch neuere Technologien wird die Abstandhaltung durch die Prägung bzw. Noppung des Filtermediums erreicht, wodurch die zusätzliche Einbringung von Abstandhaltern für die Filterfalten entfällt. Zum Einsatz kommen hier Aggregate mit Prägewalzen, mit denen die Noppung des Vlieses hergestellt wird und gleichzeitig die Falten für den späteren Filterbalg vorgegeben werden. Abhängig vom zu plissierenden und prägenden Filtermedium kann der Prozeß durch eine Vorwärmung unterstützt werden. In einer Ausführungsform der erfindungsgemäßen Verstärkung des Meltblown-Vlieses durch Imprägnierung wird ein thermoplastisches Imprägniersystem so gewählt, daß die Prägung des vorgeheizten Filtermediums im thermoplastischen Zustand mit Hilfe von Prägewalzen durchgeführt wird, wobei die Noppenform durch das Erkalten des Vlieses stabil wird.

In einer bevorzugten Ausführungsform durchläuft das Meltblown-Vlies nach dem Tränken mit Imprägniermittel vor der vollständigen Verdampfung des Lösungsmittels bzw. des Wassers vor Beendigung des Trocknungsvorgangs ein Rillierwalzenpaar und erfährt hier eine Rillenverformung, die nach der endgültigen Trocknung im Filtermedium stabilisiert wird. Auch dadurch kann die für die Verwendung im späteren plissierten Filterelement erforderliche Abstandhaltung erzielt werden. Es ist außerdem möglich, bei Verwendung eines thermoplastischen Imprägniermittels und geeigneter Vorwärmung auch nach vollständiger Trocknung zu rillieren.

Die Rillierung erfolgt bei diesem obengenannten Verfahren bevorzugt parallel zur Warenlaufrichtung.

Diese Filtermedien, die zu den entsprechenden Elementen verarbeitet werden können, sind entsprechend den Anforderungen durch geeignete Zusätze, wie in den Beispielen 1 und 2 angeführt, modifizierbar. So kann beispielsweise Geruchsneutralität, biozide Wirkung oder flammhemmende Wirkung erzielt werden. Diese Zusätze werden in der Regel in Mengen, die zwischen 0,01 und 30 %, bezogen auf die Masse des imprägnierten Meltblown-Vlieses, liegen, dem Imprägniermittel zugegeben. Je nach zu filterierendem Medium kann das Meltblown-Vlies hydrophil, hydrophob oder oliophob eingestellt werden.

Die verwendeten Rohstoffe zur Vliesherstellung und zur Imprägnierung können so ausgewählt werden, daß auch physiologische Unbedenklichkeit sichergestellt ist.

Die elektrostatische Ausrüstung zur Unterstützung der Filtrationseigenschaften der imprägnierten Vliese ist ebenso denkbar wie eine Antistatikausrüstung für die Anwendung im explosionsgeschützten Bereich. Die elektrostatische Ladung von Meltblown-Vliesen kann durch das Koronaverfahren bereits während der Vliesherstellung erzeugt werden. Mit Hilfe von Sprühstäben, an denen Hochspannung von z.B. 10-30 kV angelegt ist und die im Bereich der Spinndüse positioniert sind, werden die Meltblown-Fasern noch im thermoplastischen Zustand vor dem Erstarren mit elektrostatischer Ladung versehen, die je nach Wunsch positiv oder negativ angelegt werden kann. Dadurch kommt es zu einer Ladungstrennung in den Einzelfasern mit nahezu permanenter Wirkung.

Die Verstärkung der Meltblown-Vliese kann erfindungsgemäß nach folgenden Verfahren durchgeführt werden.

Beispiel 1

Imprägnierung eines Meltblown-Vlieses aus nichtwäßrigem System

Rohvlies:     Type BT 95 - 200, Polyester, Flächenmasse 95 g/m$^2$

Imprägniermittel und -verfahren:

Zur Herstellung eines Imprägnierbads werden in einem geeigneten Behälter nacheinander gelöst: 100 Teile Aceton, 10 Teile Epoxidharz vom Typ Bisphenol A und einem Epoxidäquivalent von 180 - 200 (z.B. Eurepox der Fa. Schering) und 5,6 Teile eines Härters vom Typ Polyamidoamin (z.B. Härter 315 der Fa. Bakelite).

Die innere Verstärkung des Meltblown-Vlieses erfolgt durch Tauchen in das Imprägnierbad, wobei die überschüssige Flotte nach dem Tauchbad vom Vlies abgestreift werden muß. Die Verdampfung des Lösungsmittels erfolgt im Schwebetrockner.

Der Harzgehalt des so imprägnierten Meltblown-Vlieses beträgt 30 % Gewichtsanteil im trockenen Zustand. Die technischen Daten des imprägnierten Vlieses sind im Vergleich zum Rohvlies in Tabelle 1 angeführt.

Zur Erzielung einer zusätzlichen Flammhemmung kann der Tränklösung die nötige Menge Flammschutzmittel auf z.B. der Basis von halogenierten organischen Verbindungen (z.B. Bromkal, Fa. Chem. Fabrik Calk) zugegeben werden.

Hydrophobierung wird erreicht z.B. durch Zugabe von Silikonharz (z.B. SY 430, Fa. Wacker);
Hydrophilierung durch Zugabe lösungsmittellöslicher Tenside, z.B. ethoxilierte Produkte (Arkopal von Hoechst);
Antistatik durch z.B. quarternäre Ammoniumverbindungen (Triallylcyanorate, Fa. Degussa);

Oliophobierung durch Zugabe einer Fluorchemikalie, z.B. FC 807 von 3M;

Farbgebung durch Verwendung lösungsmittellöslicher Farbstoffe in der Imprägnierflotte, z.B. Sudan der Fa. BASF;

Biozidwirkung durch lösungsmittellösliche Produkte, z.B. mit Wirksubstanz 2,4,4'-Trichlor-2'-hydroxydiphenylether (z.B. Irgasan DP 300, Fa. Ciba Geigy).

## Tabelle 1

|  |  | Rohvlies | imprägniertes Vlies |
|---|---|---|---|
| Flächenmasse | $g/m^2$ | 95 | 147 |
| Dicke | mm | 0,61 | 1,22 |
| Luftdurchlässigkeit | $1/m^2 s$ | 200 | 190 |
| größte Pore | $\mu m$ | 40 | 50 |
| viele Poren | $\mu m$ | 29 | 31 |
| DIN Abscheidegrad | % | 99,9 | 99,9 |
| DIN Filterwiderst. | p1mbar | 5,3 | 5,4 |
| DIN Filterwiderst. | p2mbar | 6,3 | 6,4 |

Palas Abscheidegrad nach 5 Minuten Bestaubung
Partikeldurchmesser

| | | | |
|---|---|---|---|
| 0,32-0,37 $\mu$ | % | 93,70 | 93,65 |
| 0,55-0,67 $\mu$ | % | 97,85 | 97,97 |
| 1,08-1,41 $\mu$ | % | 99,85 | 99,82 |
| Filterwiderstand p1 | Pa | 113 | 115 |
| Filterwiderstand p2 | Pa | 119 | 120 |

Beispiel 2

Imprägnierung eines Meltblow-Vlieses aus wäßrigem System

Rohvlies:    Type P-R-60-800, Polypropylen, Flächenmasse 60 g/m²

Imprägniermittel und -verfahren:

Das Polypropylenvlies wird durch Vorimprägnierung mit einer 0,2 %igen Lösung von Diisooctylsulfosuccinat-Natriumsalz in Ethanol hydrophilisiert. Nach dem Verdampfen des Lösungsmittels wird das Vlies mit einer ca. 9 %igen Stärkelösung (Kartoffelstärke, Viskosität ca. 25 mPa.s einer 10 %igen Lösung bei 60°C, gemessen nach Brookfield) auf einem Laborfoulard gleichmäßig durchimprägniert. Der Imprägniermittelgehalt des Vlieses nach dem Trocknen im Umluftofen bei 110°C betrug ca. 15 %. Die technischen Daten des Rohvlieses und des imprägnierten Vlieses sind Tabelle 2 zu entnehmen.

Durch Zugabe von ca. 0,5 Gew.% eines wasserlöslichen Biozides, z.B. eines Isothiozolonderivates (Dilurit 876 von Benckiser Knapsack) zur Imprägnierflotte kann das Vlies biozid ausgerüstet werden.

Farbig verstärkte Meltblown-Vliese können erhalten werden, wenn der Imprägnierflotte z.B. wasserlösliche Farbstoffe, sogenannte Direktfarbstoffe (z.B. Duasyn-Typen der Hoechst AG) zugemischt werden.

Zur Hydrophobierung des hydrophilen Stärkebinders können der Imprägnierflotte Fluorverbindungen (z.B. Scotchban FC 805 von 3M) zugegeben werden.

Durch Zusatz von Flammfestmitteln wie z.B. modifiziertem Ammoniumphosphat (Budit 831 der Chemischen Fabrik Budenheim) kann das verstärkte Meltblown-Vlies flammhemmend oder flammfest ausgerüstet werden.

Eine Hydrophilierung des imprägnierten Meltblown-Vlieses kann erreicht werden, wenn der Imprägnierflotte Tenside, z.B. Diisooctylsulfosuccinat-Natriumsalz zugesetzt werden.

Die Zumischung von quarternären Ammoniumverbindungen, z.B. Distearyldimethylammoniumchlorid (Präpagen WK der Hoechst AG) zur Imprägnierflotte bewirkt eine antistatische Ausrüstung des Vlieses.

## Tabelle 2

| | | Rohvlies | imprägniertes Vlies |
|---|---|---|---|
| Flächenmasse | $g/m^2$ | 60 | 70 |
| Dicke | mm | 0,50 | 0,57 |
| Luftdurchlässigkeit | $1/m^2 s$ | 630 | 605 |
| größte Pore | /um | 90 | 85 |
| viele Poren | /um | 63 | 61 |
| DIN Abscheidegrad | % | 96,0 | 96,1 |
| DIN Filterwiderst. | p1mbar | 1,5 | 1,6 |
| DIN Filterwiderst. | p2mbar | 2,2 | 2,3 |

Palas Abscheidegrad nach 5 Minuten Bestaubung
Partikeldurchmesser

| | | | |
|---|---|---|---|
| 0,32-0,37/u | % | 69,18 | 68,68 |
| 0,55-0,67/u | % | 79,50 | 79,48 |
| 1,08-1,41/u | % | 93,39 | 93,27 |
| Filterwiderstand p1 | Pa | 40 | 43 |
| Filterwiderstand p2 | Pa | 53 | 57 |

Beispiel 3

Imprägnierung eines Meltblown-Vlieses aus waßrigem System unter Zugabe von Lösungsmittel

Rohvlies:     Type BT 84 - 150, Polyester Flächenmasse 84 $g/m^2$

Imprägniermittel und -verfahren:

Das Vlies wurde mit einer ca. 5,5 %igen Emulsion eines anionischen Copolymeren auf Basis Acrylat/Styrol in einem Methanol-Wassergemisch, Verhältnis 1:1 auf einem Laborfoulard gleichmäßig durchimprägniert. Der Imprägnierflotte wurde noch 0,3 % Vernetzer auf der Basis Polyaziridin zugemischt. Die Vernetzung erfolgte beim Trocknen im Umluftofen bei 110°C. Der Imprägniermittelgehalt des Vlieses betrug ca. 17 Gew.%.

## Tabelle 3

|  |  | Rohvlies | imprägniertes Vlies |
|---|---|---|---|
| Flächenmasse | g/m$^2$ | 84 | 97,5 |
| Dicke | mm | 0,57 | 0,95 |
| Luftdurchlässigkeit | l/m$^2$s | 155 | 150 |
| größte Pore | um | 47 | 63 |
| viele Poren | um | 25 | 34,5 |
|  |  |  |  |
| DIN Abscheidegrad | % | > 99,9 | > 99,9 |
| DIN Filterwiderst. | p1mbar | 5,9 | 6,0 |
| DIN Filterwiderst. | p2mbar | 7,5 | 7,5 |

Palas Abscheidegrad nach 5 Minuten Bestaubung
Partikeldurchmesser

|  |  | Rohvlies | imprägniertes Vlies |
|---|---|---|---|
| 0,32-0,37 u | % | 93,00 | 93,09 |
| 0,55-0,67 u | % | 97,65 | 97,71 |
| 1,08-1,41 u | % | 99,86 | 99,75 |
|  |  |  |  |
| Filterwiderstand p1 | Pa | 133 | 136 |
| Filterwiderstand p2 | Pa | 145 | 154 |

Im folgenden sind die Methoden für die Bestimmung der Meßgrößen, die zur Produktbeschreibung bzw. - charakterisierung der Meltblown-Filtermaterialien in den Tabellen 1 bis 3 herangezogen werden, aufgeführt.

Flächenmasse: DIN ISO 536
Dicke: DIN 53105; Tasterdruck: 20kPa
Luftdurchlässigkeit: in Anlehnung an DIN 53887
Porendurchmesser: ISO 4003
Staubabscheidegrad und Filterwiderstände:
Methode 1: DIN 44956/2;
            Entwurf November 1987
Methode 2: Palas, beschrieben in
            (a) W. Willemer, W. Mölter; Praxisnahe Überprüfung von Staubfiltern; Chemietechnik
            15 (1986) Heft 12, Seiten 20-26;

7

(b) W. Mölter, C. Helsper; Fast and Automated Testing of Filter Media; Filtech Conference, 23.-25.9.1987, Utrecht/Holland

| | |
|---|---|
| Anströmgeschwindigkeit: | 15 cm/s |
| Staubkonzentration Rohgas: | 200 mg Arizonafeinstaub DIN 44956/2 pro Kubikmeter |
| Partikelgrößenverteilung: | 0 bis 80 $\mu$m |
| Bestaubungszeit: | 5 Minuten |

für den Abscheidegrad ausgewertete Partikelgrößen:

0,32 - 0,37 $\mu$m

0,55 - 0,67 $\mu$m

1,08 - 1,41 $\mu$m

**Patentansprüche**

1. Meltblown-Vlies mit einer Porengröße von 10 bis 150 $\mu$m und einer Luftdurchlässigkeit von 20 bis 2000 l/m$^2$s, dadurch gekennzeichnet, daß es mit einem inneren Verstärkungsmittel verstärkt ist.

2. Meltblown-Vlies gemäß Anspruch 1, dadurch gekennzeichnet, daß das Verstärkungsmittel in einer Menge von 5 bis 60 % Gewichtseinheit des Meltblown-Vlieses vorhanden ist.

3. Meltblown-Vlies gemäß Anspruch 1 und 2, dadurch gekennzeichnet, daß das Verstärkungsmittel ein Imprägniermittel auf wäßriger oder nichtwäßriger Basis ist.

4. Meltblown-Vlies gemäß einem oder mehreren der vorhergehenden Ansprüche, dadurch gekennzeichnet, daß in den für das Meltblown-Vlies verwendeten Rohstoffen oder Ausgangsstoffen und/oder in den die Verstärkung bewirkenden Stoffen zusätzlich Additive vorliegen.

5. Meltblown-Vlies gemäß Anspruch 4, dadurch gekennzeichnet, daß das imprägnierte Vlies Antistatikmittel, Biozidmittel, flammhemmende Mittel, hydrophobierende Mittel, hydrophilierende Mittel, oliophobe Mittel und/oder Farbstoffe enthält.

6. Meltblown-Vlies gemäß einem oder mehreren der Ansprüche 1 bis 3, dadurch gekennzeichnet, daß das Meltblown-Vlies elektrostatisch geladen ist.

7. Meltblown-Vlies gemäß einem oder mehreren der Ansprüche 1 bis 3, dadurch gekennzeichnet, daß das Meltblown-Vlies unter Verwendung eines hydrophilierten Polymers hergestellt ist.

8. Meltblown-Vlies gemäß einem oder mehreren der vorhergehenden Ansprüche, dadurch gekennzeichnet, daß das Vlies nach der Imprägnierung jedoch vor Beendigung der Verdampfungsphase in der Trocknungszone mit einer bleibenden Rillierung versehen wird.

9. Meltblown-Vlies gemäß einem oder mehreren der Ansprüche 1 bis 7, dadurch gekennzeichnet, daß das mit einem Thermoplasten imprägnierte Vlies nach der Imprägnierung und vollständig erfolgter Trocknung im thermoplastischen Zustand des Imprägniermittels rilliert wird.

10. Meltblown-Vlies gemäß Anspruch 8 und 9, dadurch gekennzeichnet, daß die Rillierung parallel zur Warenlaufrichtung erfolgt.

11. Meltblown-Vlies gemäß Anspruch 1 mit den folgenden Kenndaten:

|  |  | Rohvlies | imprägniertes Vlies |
|---|---|---|---|
| Flächenmasse | g/m$^2$ | 95 | 147 |
| Dicke | mm | 0,61 | 1,22 |
| Luftdurchlässigkeit | l/m$^2$s | 200 | 190 |
| größte Pore | /um | 40 | 50 |
| viele Poren | /um | 29 | 31 |
| DIN Abscheidegrad | % | 99,9 | 99,9 |
| DIN Filterwiderst. | p1mbar | 5,3 | 5,4 |
| DIN Filterwiderst. | p2mbar | 6,3 | 6,4 |

Palas Abscheidegrad nach 5 Minuten Bestaubung
Partikeldurchmesser

| | | | |
|---|---|---|---|
| 0,32-0,37/u | % | 93,70 | 93,65 |
| 0,55-0,67/u | % | 97,85 | 97,97 |
| 1,08-1,41/u | % | 99,85 | 99,82 |
| Filterwiderstand p1 Pa | | 113 | 115 |
| Filterwiderstand p2 Pa | | 119 | 120 |

**12.** Meltblown-Vlies gemäß Anspruch 1 mit den folgenden Kenndaten:

9

|  |  | Rohvlies | imprägniertes Vlies |
|---|---|---|---|
| Flächenmasse | g/m$^2$ | 60 | 70 |
| Dicke | mm | 0,50 | 0,57 |
| Luftdurchlässigkeit | l/m$^2$s | 630 | 605 |
| größte Pore | /um | 90 | 85 |
| viele Poren | /um | 63 | 61 |
| DIN Abscheidegrad | % | 96,0 | 96,1 |
| DIN Filterwiderst. | p1mbar | 1,5 | 1,6 |
| DIN Filterwiderst. | p2mbar | 2,2 | 2,3 |

Palas Abscheidegrad nach 5 Minuten Bestaubung

Partikeldurchmesser

| 0,32-0,37/u | % | 69,18 | 68,68 |
|---|---|---|---|
| 0,55-0,67/u | % | 79,50 | 79,48 |
| 1,08-1,41/u | % | 93,39 | 93,27 |
| Filterwiderstand p1 | Pa | 40 | 43 |
| Filterwiderstand p2 | Pa | 53 | 57 |

**13.** Meltblown-Vlies gemäß Anspruch 1 mit den folgenden Kenndaten:

| | | Rohvlies | imprägniertes Vlies |
|---|---|---|---|
| Flächenmasse | $g/m^2$ | 84 | 97,5 |
| Dicke | mm | 0,57 | 0,95 |
| Luftdurchlässigkeit | $l/m^2 s$ | 155 | 150 |
| größte Pore | /um | 47 | 63 |
| viele Poren | /um | 25 | 34,5 |
| DIN Abscheidegrad | % | > 99,9 | > 99,9 |
| DIN Filterwiderst. | p1mbar | 5,9 | 6,0 |
| DIN Filterwiderst. | p2mbar | 7,5 | 7,5 |

Palas Abscheidegrad nach 5 Minuten Bestaubung
Partikeldurchmesser

| | | Rohvlies | imprägniertes Vlies |
|---|---|---|---|
| 0,32-0,37/u | % | 93,00 | 93,09 |
| 0,55-0,67/u | % | 97,65 | 97,71 |
| 1,08-1,41/u | % | 99,86 | 99,75 |
| Filterwiderstand p1 | Pa | 133 | 136 |
| Filterwiderstand p2 | Pa | 145 | 154 |

**14.** Verfahren zur Herstellung eines Meltblown-Vlieses gemäß einem oder mehreren der vorhergehenden Ansprüche, dadurch gekennzeichnet, daß man ein Rohvlies mit einer Lösung oder Emulsion des Imprägniermittels, die ggf. Additive enthält, behandelt und anschließend trocknet, wobei man das Imprägniersystem und die Trocknung so abstimmt, daß keine wesentliche Veränderung der Poren eintritt.

**15.** Verfahren zur Herstellung eines Meltblown-Vlieses gemäß Anspruch 14, dadurch gekennzeichnet, daß man das Vlies durch Vorimprägnierung hydrophilisiert und anschließend mit einer wäßrigen Lösung des Imprägniermittels, die ggf. Additive enthält, behandelt.

**16.** Verfahren zur Herstellung eines Meltblown-Vlieses gemäß Anspruch 14, dadurch gekennzeichnet, daß man das Vlies mit einer Emulsion eines anionischen Copolymers in einem Methanol-Wassergemisch, die einen Vernetzer und ggf. weitere Additive enthält, behandelt.

**17.** Verwendung eines Meltblown-Vlieses gemaß einem oder mehreren der vorhergehenden Ansprüche als Filtermaterial.

**18.** Verwendung eines Meltblown-Vlieses gemäß einem oder mehreren der Ansprüche 1 bis 17 zur Herstellung von plissierten und geprägten Filterelementen.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | US-A-3 345 207  (G.W. COGSWELL) <br> * Especially column 8, lines 19-32 * <br> --- | | B 01 D  39/16 <br> D 04 H   1/54 |
| A | GB-A-1 417 696  (LANTOR LTD) <br> --- | | |
| A | GB-A- 770 396  (VOKES LTD) <br> --- | | |
| A | FR-A-1 181 171  (ROHM & HAAS) <br> --- | | |
| A | EP-A-0 323 117  (TORAY INDUSTRIES) <br> ----- | | |

TECHNICAL FIELDS
SEARCHED (Int. Cl.5)

B 01 D  39/00
D 04 H   1/00

The present search report has been drawn up for all claims

| Place of search | Date of completion of the search | Examiner |
|---|---|---|
| THE HAGUE | 15-10-1991 | DEVISME F.R. |